# EUROPEAN PATENT APPLICATION

(11) **EP 2 199 968 A1**
(43) Date of publication of application: **23.06.2010**
(21) Application number: 08022129.4
(22) Date of filing: 19.12.2008
(51) Int. Cl.: G06Q 30/00

(54) **Service lets suppliers upload to database of anonymized demands**

(71) Applicant: Koninklijke KPN N.V., 2516 CK The Hague (NL)
(72) Inventor: Van Steenbergen, Ate Sander, 9737 NN Groningen (NL); Alberts, Albert Willem, 9751 TC Haren (NL)
(74) Representative: Wuyts, Koenraad Maria

(57) **Abstract**

Demands of subscribers that have registered with the service are posted in a database with identifiers that do not reveal direct contact information of the subscribers. Instead, the service conceals the public domain identities of the subscribers using its own service identifiers that only allow identifying an individual one among the subscribers. Possible suppliers may query the database without having to register with the service. The querying is based on keywords in order to find demands, whose profiles match with the keywords. Information about the supplier's goods and services is made available to the subscriber of the matching profile when the supplier uploads content information to the service, identifying the relevant subscriber by means of this subscriber's service identifier and identifying him/herself using a public domain identifier. The service then stores the content information in a place accessible to this subscriber.

## Description

### FIELD OF THE INVENTION

The invention relates to a method of providing a brokerage service via a data network.

### BACKGROUND ART

Brokerage services are known that seek to find matches between supply and demand. The service "eBay" is a well known example of an online auction and shopping website in which people and businesses buy and sell goods and services worldwide. Goods and services are categorized based on, e.g., the type of goods and services as represented by keywords, or the names of parties currently offering goods and/or services.

### SUMMARY OF THE INVENTION

The inventors have realized that the known brokerage services are driven by transactions. That is, a party can query the database of the brokerage service to determine if there has been posted an offer of a good or service that is to the party's interest, or if there has been posted a demand for goods or a service to which the party can cater. Typically, the party can contact the person listed for the offer or for the demand, for example via email or telephone, e.g., in order to ask for additional information. The interested party may or may not remain anonymous or may be using a nickname, whereas the listed person discloses his/her IP address or telephone number for being contacted by the party. As a result, the way is opened up for spamming or sending further unsolicited information.

The inventors now propose a brokerage service that, in a sense, is the logic complement to the eBay service, and that in addition enables to preserve the listed person's anonymity. More specifically, the invention relates to a method of providing a brokerage service via a data network. The method comprises maintaining a database that stores a plurality of profiles. Each respective one of the profiles is functionally associated with one or more subscribers to the service. The association is taken care of by a respective profile identifier that preserves anonymity of the one or more subscribers. Each respective one of the profiles comprises one or more respective indications representative of a respective interest of the one or more subscribers associated with the respective profile. The method enables a party, e.g., a trader, to query the database without registering with the brokerage service and to retrieve at least a specific one of the profiles. The querying is carried out by means of, e.g., the party's entering one or more keywords or other search terms into a search engine provided by the brokerage service. For example, the party is enabled to retrieve all profiles that have been entered or updated since a specific date. As another example, the party is enabled to run Boolean searches on combinations of pricing range, range of dates, geographic region, language, etc. As yet another example, the party is enabled to browse the web pages, rendering the profiles and having been categorized by the brokerage service in advance according to any convenient criterion or a combination of criterions such as topic, geographic region, date, etc. The method enables the party, without registering with the brokerage service, to upload specific content information to the brokerage service via the data network, using a specific one of the profile identifiers to identify the specific profile. The brokerage service imposes the condition that the content information comprises a party identifier of the party that is available in the public domain. Upon receipt of the content information and verifying the presence of the party identifier, the method comprises storing the content information in a repository for being made accessible to one or more specific subscribers associated with the specific profile.

In the invention, the demands of, or offers from, the subscribers submitted to the brokerage service are posted in a database with profile identifiers that do not reveal direct contact information of the subscribers. Instead, the service conceals the subscribers using its own profile identifiers. In an embodiment of the invention, a single profile identifier is associated with only a single subscriber whereas, in another embodiment, a single profile identifier is associated with multiple subscribers. In the former embodiment, the profile identifier serves to identify to the brokerage service the associated subscriber. In the latter embodiment, the demands or offers submitted by the subscribers are clustered by the brokerage service and such cluster is given a single profile identifier. The profile identifier is then associated with multiple subscribers who can only be identified by the brokerage service. A party may query the database, e.g., based on keywords in order to find demands or offers, whose profiles match with the keywords. Information about the party's goods and services is made available to the one or more subscribers of the matching profile when the party has uploaded content information to the service. The profile identifier then serves to identify the relevant subscriber(s). The service then stores the content information in a place accessible to the subscriber(s) associated with the profile identifier. The party is free to interact with the database, which has basically become part of the public domain. However, in order to be able to upload the content information in response to finding a matching profile, the party has to disclose his/her public domain identifier such as email address, telephone number, street address, name, or web-site (URL), etc., or a combination thereof that enables the relevant subscriber to contact the party if the subscriber so desires. That is, the initiative to contact the party resides solely at the subscriber. The brokerage service can run a format check or existence check automatically in order to detect the presence of the party's public domain identifier. For example, the party that wants to upload content information has to use a pre-formatted template with fields to be filled out, among which are fields for filling out an email address or a telephone number. The brokerage service can even automatically check whether or not the public domain identifier provided is indeed listed in, e.g., a publicly available telephone directory or publicly available email address directory. The brokerage service may check whether the public domain identifier of an uploading party occurs in a so-called "blacklist" of spammers. If the public domain identifier of the uploading party occurs on the blacklist or is unacceptable for other reasons, the brokerage service may automatically delete the uploaded content information before storing it for being accessed by the addressed subscribers. This filtering in advance has the advantage that the subscribers do not have to browse the content information originating from a possibly suspicious party. The service may also filter the uploaded content information based on its semantics. For example, a subscriber may have specified in advance to the service not to be interested in content information supplied from outside a certain geographic region, or in content information that is deemed offensive, or in "graphically explicit" content information. The service then filters on the basis of the IP address or submitted street address of the uploading party, on the basis of off-color language in the text of the uploaded document, or on the basis of certain terms or other characteristics of an uploaded video. Specific software has been commercially available that does this filtering, and is generally referred to as "censorware". The brokerage service may maintain a white-list of parties who have proved acceptable based on interactions with the service and/or on subscriber feedback in the past, e.g., as input to a recommendations section at the service's website.

In an embodiment of the brokerage service of the invention, the brokerage service verifies whether the public domain identifier of the party, associated with the uploaded content information, is correct, e.g., is not being abused. For example, a not-so-principled person may upload nonsense or offensive content information together with the public domain identifier of another person or a company, so as to harm the company's reputation or just as a (bad) joke. Upon receipt of the content information and the public domain identifier, the brokerage service returns a message to this public domain identifier that basically says: "You have just uploaded this content information. Is that correct?". The party associated with the public domain identifier then has to confirm having uploaded this content information. Upon receipt of the confirmation, the content information is stored for being accessed by the intended subscribers. If there is no such confirmation or a negative reply, the content information is not stored so as to be accessible by the intended subscribers. A subscriber may explicitly indicate to the brokerage service that he/she wants the brokerage service to automatically verify whether the offers addressed to him/her include a bona-fide public domain identifier of the uploading party, such as an email address or a telephone number. The email address can be verified using a predetermined message with a text such as the one above that is sent automatically by a server at the brokerage service. A telephone number can be verified using Interactive Voice Response (IVR) technology. IVR technology allows a computer to detect voice and keypad inputs. IVR technology has been used extensively in telecommunications. For example, the server at the brokerage server automatically dials the telephone number given by the uploading party and instructs the recipient to press the button "1" if he/she did not upload the content information and the button "2" is he/she did.

An embodiment of the method in the invention enables the party to access at least a particular one of the indications in the specific profile. The particular indication is the one that has given rise to the match. This indication then provides more information and a context that, combined, enable the party to determine whether or not to respond by uploading content information to the associated subscriber or associated subscribers.

In a further embodiment, the method in the invention comprises alerting the one or more specific subscriber to the content information when stored. For example, the subscriber has registered with the service and has given his/her mobile phone number or email address for the purpose of receiving alerts. The service then maintains a look-up table that enables to find the relevant phone number or email address on the basis of the profile identifier included in the content information uploaded by the party.

In a further embodiment, the method comprises providing storage means for storing the uploaded content information for the relevant subscriber. The storage mans is configured so as to maintain the subscriber's anonymity with respect to the uploading party. Accordingly, the content information is hosted by the brokerage service by means of creating an electronic file folder for the subscriber or such folder for the uploading party. The content information can be accessed and opened by the subscriber via a Web interface or via FTP or WebDav (Web-based Distributed Authoring and Versioning: a set of extensions to HTTP that allows collaborative editing and managing of files on a remote World Wide Web server. The storage means includes, e.g., disk space, a web site, a folder, a database, etc. The content information is stored via an upload service (Web: HTTP post, FTP or email (SMTP), etc. In this manner, the party cannot retrieve the IP address of the subscriber accessing this Web page. If the party had uploaded a URL of his own website, the party would have been able to identify the possibly interested subscriber upon the latter's accessing the party's website. Preferably, the brokerage service controls the displaying or otherwise rendering of the content information. If the content information as uploaded contains pointers, links or images that refer to the website of the uploading party, then the network address of the subscriber can get logged at the party's site when the subscriber accesses these pointers, links or images. Technically this relates to a HTTP-GET command that will be transferred to the source of the item to be retrieved. Accordingly, the brokerage service may prevent this from happening by means of, e.g., deleting such pointers, links or images, or by means of retrieving them itself automatically and before the subscriber ius given access to the uploaded content information.

In a further embodiment, the party has conditional access to the database under control of the service. That is, the brokerage service determines the conditions under which a party is allowed to access the database for querying. If too many complaints about a certain party have been received from subscribers, the brokerage service may deny the party further access. Similarly, the brokerage service may monitor the parties uploading the content information. If, for example, a particular party seems upload too much content information and/or seems to upload the same content information to too many subscribers, and/or seems to upload materials that are socially or politically not correct, a closer investigation may be warranted at the brokerage service side in order to determine whether this party is abusing the privilege of given access to the database.

In a further embodiment, the method comprises maintaining an index of certain linguistic terms representative of the indications currently registered in the database. This index, made accessible to the party, facilitates the querying of the database.

In a further embodiment, the method comprises maintaining a further index of further linguistic terms representative of further content information uploaded by further parties in the past. This further index, made accessible to subscribers, facilitates creating the indications.

The brokerage service of the invention has following advantages. The service is self-correcting in that spamming will result in denial to the party of the access to the brokerage service upon receipt of complaints from the subscribers. Subscribers will only receive content information that is relevant to their profiles. The service enables parties to make targeted offers, namely to those subscribers that are in principle interested in the goods or services delivered by this party, the declared interests being accessible in the profiles that can be browsed or otherwise retrieved. The service maintains anonymity of the subscriber with respect to the suppliers and lets the subscriber take the initiative to contact the supplier.

In an embodiment of a method of the invention, the profile identifiers are dynamically allocated to the subscribers. That is, when a querying party retrieves a profile, a profile identifier is allocated to the profile. The profile identifier of the profile is changed after the party has uploaded content information intended for the subscriber(s) associated with the retrieved profile. As a result, a profile identifier is usable for addressing the subscriber(s) only once, and the party cannot re-use the same profile identifier afterwards. This approach further prevents abuse of the profile identifier, e.g., for purposes of spamming.

The above scenarios indicate a dichotomy of the population in subscribers and parties. However, a particular subscriber may also query the database to see if other subscribers have specified interests to which the particular subscriber can cater. Again, anonymity of the other subscribers is maintained and the initiative to establish direct contact is left up to the other subscribers.

In above scenarios, the querying is done by the party and upon retrieving a profile, the party is enabled to upload content information. In a variation on the theme of the invention, the invention provides a method of providing a brokerage service via a data network. The method comprises maintaining a database storing a plurality of profiles. Each respective one of the profiles is functionally associated with one or more subscribers to the service via a respective profile identifier that preserves anonymity of the one or more subscribers. Each respective one of the profiles comprises one or more respective indications representative of a respective interest of the one or more subscribers associated with the respective profile. The method comprises enabling a party to upload specific content information via the data network to the service without registering with the brokerage service. The content information is characterized by an attribute, e.g., one or more keywords, and includes a further identifier of the party from the public domain. The method comprises storing the content information in a repository. The method further comprises running a query on the database using the attribute for determining a specific one of the profiles matching the attribute. Upon finding the specific matching profile, the method makes the stored content information accessible to the one or more specific subscribers associated with the specific profile. In this embodiment, the query is run by the brokerage service itself.

In general, the brokerage service of the invention enables a subscriber to access categorized, and verified, content information for which the subscriber has declared an interest, while remaining anonymous for suppliers of that content information. This approach contrasts with the known services, e.g., eBay, wherein a member of the public, who is interested in an offer of a particular kind, is to search a high volume of information that suppliers have provided for everyone to browse.

### BRIEF DESCRIPTION OF THE DRAWING

The invention is explained in further detail, by way of example and with reference to the accompanying drawing, wherein:
Fig.1 is a block diagram of a system in the invention; and
Figs.2 and 3 are flow diagrams illustrating the method of the invention.

Throughout the Figures, similar or corresponding features are indicated by same reference numerals.

### DETAILED EMBODIMENTS

A first example of the brokerage service of the invention is now discussed, wherein a profile is associated with only one subscriber. In a brokerage service according to the invention, a subscriber to this service registers with the service and provides a user profile. The profile comprises indications of this subscriber's interests with regard to items about which this subscriber would like to receive additional information, e.g., from suppliers of such items. Preferably, the profile also comprises an indication of a geographic location of the subscriber. An item, for which a subscriber can add an indication to his/her profile, is e.g., water polo sports equipment, orthopedic appliances for supporting and holding a bodily part in the correct position, kitchen appliances, digital cameras, vacation resorts in a particular geographic region and capable of accommodating a specific number of guests during a specific time period, e.g., a vacation house for two adults and three children for the period of July 15 to August 7, gardeners, baby-sitters available within a geographic region, pizza home delivery services, smart phones, traditional domestic dish restaurants, DVDs of a certain movie, beer glasses, specific chassis parts for a particular vintage Bentley, and so on, and so on. The profiles of the subscribers are stored in a database that can be browsed, or queried on the basis of the indications. A supplier of goods and/or services can browse or query the database and thus identify whether there are subscribers who might possibly be interested in the supplier's goods and/or services. The subscribers themselves remain anonymous with respect to the suppliers. This anonymity can be implemented by associating each respective one of the profiles with the subscriber to the service via a respective profile identifier. The supplier, having found a possible match between a subscriber's profile and the supplier's goods or services, uploads to the brokerage service information about these goods and/or services, together with the profile identifier for which this information is intended. This content information may take the form of an electronic document such as a piece of text, one or more images, a video clip, an audio clip, or a combination thereof. Alternatively, or in addition, the content information can include a URL of a website or of content information posted on the brokerage website allocated to this subscriber. The URL can be of the supplier's own website on the data network. However, in order to maintain anonymity of the subscriber, the URL can be of another website created within the brokerage service domain. As a result, the supplier of the goods and/or services cannot infer the IP address of the interested subscriber via the website in the brokerage domain.

The brokerage service alerts the subscriber to content being offered to him/her by the supplier of goods and/or services via, e.g., an SMS notification at the subscriber's mobile telephone, an email notification at the subscriber's personal computer, a web feed mechanism, etc. In order to maintain anonymity of the subscriber with respect to the goods and/or services supplier, the brokerage service converts the profile identifier into the relevant data network address of the subscriber, thus shielding the subscriber's network address from the supplier.

The profile has been compiled by the subscriber by means of, for example, selecting certain keywords from a pre-determined set of keywords or expressions, created by the brokerage service. To this end, the brokerage service may have created a hierarchical menu of selectable options. Selecting an option at a higher level determines the further options that can be selected a lower level. Each particular option is associated with one or more specific keywords or one or more expressions in a natural language. Alternatively, the profile is compiled by means of the subscriber entering a text without any constraints imposed by the brokerage service on the words being used. The brokerage service may have determined certain categories of interests in advance. The subscriber then selects one or more categories that are associated with the keywords entered by the subscriber. This approach facilitates interpreting the keywords as a context is provided in the form of the category. For example, the brokerage service provides to the subscribers a plurality of main categories such as "Culture"; "Vacation"; "Entertainment"; "Collectibles"; "Sports"; "Tools", "Automobiles" and per main category multiple sub-groups. For example, the main category "Tools" includes the sub-groups "woodworking tools", "car mechanic tools", "gardening tools", etc. Accordingly, when a subscriber has in his/her profile a piece of text that says: "I am looking for specific tools in order to supplement the onboard toolkit of my vintage Voisin C24", only the aficionado will immediately recognize that this subscriber apparently owns a French automobile made by "Avions Voisin", famous for the remarkably square body lines of their cars, giving them the status of a piece of art. If the subscriber has allocated his/her declared interest to the category "Automobiles", the context formed by this category directly enables interpreting what is being meant here by this piece of text. A supplier of goods and/or services may then query the automobiles category of the database on the basis of keywords, e.g., via a search engine provided by the brokerage service.

The brokerage service may, alternatively or in addition, have categorized the listed supply and demand based on attributes in the listed profile such as, e.g., price range, relevant date, geographic region, country, postal code, language, year, attributes such as "old", "new", "used", "color", "type" or any combination thereof that serves to facilitate maintaining or searching the database of profiles.

The brokerage service may first verify if the content, which is submitted by the supplier of goods and/or services to the brokerage service, complies with the targeted profile and, possibly, with other pre-determined rules, e.g., ethical rules, before posting the content on the associated subscriber's website or causing the SMS or email to be sent.

If the subscriber has been notified, he/she may want to check the content information from the goods and services supplier. If the subscriber then wants to find out more about the offered goods and/or services, the subscriber can take the initiative and contact the supplier directly via public domain contact information in the content information. Alternatively, the subscriber can initiate a correspondence with the supplier via the brokerage service in order to maintain anonymity. The brokerage service then serves as a relay or forwarding service, masking the subscriber's telephone number or email address by having it replaced by a service telephone number or service email address.

If one or more subscribers file complaints about a particular supplier, based on the content information from the supplier, or based on the quality of goods and/or service delivered by the supplier, the brokerage service may decide to deny to the supplier future access to the brokerage service.

The brokerage service of the invention has following advantages. The service is self-correcting in that spamming results in denial to the supplier of access to the brokerage service. Subscribers only will receive content information that is relevant to their profiles. The service enables suppliers to make targeted offers, namely to those subscribers that are, according to their profiles, in principle interested in the goods or services delivered by this supplier. The service maintains anonymity of the subscriber with respect to the suppliers and lets the subscriber take the initiative to contact the supplier.

The above scenarios indicate a dichotomy of the population in subscribers and other parties, e.g., the suppliers mentioned above. However, a particular subscriber may also query the database to see if other subscribers have specified interests to which the particular subscriber can cater. Again, anonymity of the other subscribers is maintained and the initiative to establish direct contact is left up to the other subscribers.

A particular subscriber may decide, at a certain moment, to modify his/her profile. For example, the subscriber's profile indicates that he/she was interested in receiving information about where to find bakeries that supply genuine "Groninger Koek" (a cake named after the Dutch province of Groningen, having as main ingredients rye and syrup) within a certain geographic region. A specific bakery responds by uploading information about its range of Groninger cakes, and with contact information that matches the geographic region indicated by this subscriber. Once the subscriber has satisfied him/herself of the usability of this information, he/she may decide that no further information is needed anymore, ever, about Groninger cakes. He/she then logs in to the brokerage service, selects the editing mode and modifies his/her profile accordingly.

The database in the invention comprises a collection of indications of fields of interests for the population of the subscribers. In order to help using or navigating the database, or to give first impressions of the relevant topics covered by the collection, the brokerage service can provide assistance, examples of which are the following.

In a home page of the website of the brokerage service, a list is given with the ranking of the, say, ten, most popular topics or keywords. Alternatively, the profiles are clustered at the service according to topic or keyword or combination of keywords, and the topic, keyword or combination of keywords per such cluster is listed. The clustering may be continued to form subclusters within one higher level cluster so as to create a hierarchical menu of options that reflect the current interests of the subscribers at various levels of details. This then gives an indication of the major fields of interests of the covered population of subscribers and/or helps to pre-select the cluster of subscribers on whose profiles one would like to run a query.

Per topic, keyword or combination of keywords, the brokerage service could give the number of subscribers, whose profiles match the topic, keyword or combination of keywords.

In business models based on the brokerage service of the invention, the subscription fee payable by a subscriber, may be made dependent on, e.g., the number of indications per profile; the number of profiles listed in the database per subscriber; the number of items of uploaded content inspected by the subscriber; whether the indication relates to demand or to an offer; the time during which the subscriber wants to have his/her profile listed in the database; the topic, etc.

In an embodiment of the brokerage service, a priority ranking of the subscribers is being used. That is, in case multiple subscribers have the same declared interests in their profile, and content information has been uploaded that addresses these subscribers, the brokerage service of the invention makes the uploaded content information first available to, or first notifies, the particular one of the subscribers with the highest ranking, and only thereafter to the subscriber of the second rank and so on. The priority ranking is based on, e.g., the time of registering the profile with the relevant interest, or a fee, or a geographic distance between the registered address of the subscriber and the given address of the party uploading the content information, etc.

The uploaded content information and public domain contact information of the party that has uploaded the content information addresses a specific subscriber. In a particular embodiment of the invention, this content information and the contact information remain secure in the sense that other subscribers and other parties cannot access this content information and contact address uploaded to the service as intended for this specific subscriber, identified at the brokerage sevice by the profile identifier.

A subscriber may indicate to the brokerage service that he/she is only able or willing to accept content information in one or more certain formats, e.g., based on the file extensions such as "JPG"; "WAV"; "HTML"; "DOC"; ""PPT"; "AVI"; or based on the type of media of the content information such as audio file; video file; still picture; plain text; Word file; Excel file; URL; ActiveX; etc. The brokerage service then only forwards, or otherwise makes available, content information to this subscriber that complies with the format or media type specified by this subscriber.

The invention has been explained above with the term "subscriber". The brokerage service may or may not require a subscription or usage fee, but what is relevant here is that the person referred to as the "subscriber" has first registered with the brokerage service. Note that the profile identifier as used in an embodiment of the invention needs to be converted to a name, a telephone number, an email address or another identifier for use external to the brokerage service of the invention, in order to send alerts. In a specific embodiment, a subscriber may remain anonymous to the brokerage service as well in the sense that the subscriber does not provide his/her personal contact information to the service. The subscriber registers then by means of posting his/her profile, as a result of which he/she receives a service identifier for use within the brokerage service. The subscriber then him/herself has to check the database whether new content information has been uploaded by a responding party upon finding a match with this subscriber's profile.

The brokerage service need not charge a fee but can be supported by, e.g., donations or a governmental organization. For example, a local government supports a brokerage service that allows low-income families in the region to post their needs, or does this on their behalf. The needs may be restricted to used-goods such as second-hand kitchen appliances, used clothing, used toys, etc. Once a party has uploaded content information relevant to a specific need as posted in a particular profile, the uploaded content is checked by a government official and, when acceptable, the official may negotiate a transaction with the party or arrange a pick up of the goods for free, all on behalf of the subscriber.

In practical embodiments of the brokerage service in the invention, restrictions may apply to the amount of data of the content information that a party may upload upon finding a matching profile or to the time period during which the content information is kept stored at the brokerage service. For example, an uploading party is restricted to submitting file sizes of, say, 1 Megabyte or to a certain number of uploads per day. As another example, the brokerage service or the uploading party may specify that the uploaded content be kept at the brokerage service for, say, five days or two weeks, before the content information is automatically deleted.

In a further embodiment of the brokerage service in the invention, the records in the database that store an indication in the profile of a specific subscriber, are temporarily blocked for access by the search engine, if one party or a certain number of parties have uploaded content information upon finding a match with this indication. The specific subscriber can disable the blockade automatically by means of, e.g., checking his/her inbox, i.e., the segment of the repository that stores the uploaded content addressed to the profile associated with this subscriber, or downloading of the content information. This scenario has an advantage in that parties are motivated to respond fast upon finding a match, and that subscribers are motivated to check their inboxes frequently. This shortens the life cycle of the uploaded content, as a result of which the repository does not need to keep obsolete content information indefinitely, thus exploiting memory space more efficiently. Also, a subscriber does not get flooded with content information in case he/she has a very popular item in his/her profile. If the subscriber downloads, or otherwise inspects the uploaded content information, the indication in his/her profile that motivated the party to upload the content information is automatically deleted from the subscriber's profile unless the subscriber takes a specific action with regard to the service after having reviewed the uploaded items. This scenario assumes that the uploaded content information complies with the offer or demand in the profile's indication when the subscriber has downloaded or otherwise inspected the content information, as a result of which the brokerage service assumes it has met its goal. The subscriber may then carry out a pre-determined interaction with the brokerage server, e.g., clicking a button "please continue gathering uploads for me" in the relevant web page rendered at the graphical user interface of the subscriber's s client. If the subscriber does so, the inspected content information is deleted and the validity of the indication in the subscriber's profile restored.

In a further embodiment of the brokerage service in the invention, the profiles are maintained in the service's database for only a limited time, and then deleted unless the subscriber takes action in time. For example, the subscriber has to click a button "please keep my profile for another ten days" in the relevant web page rendered at the graphical user interface of the subscriber's client in order to avoid his/her profile getting deleted. This scenario helps to prevent the number of profiles stored from growing without restrictions and to prevent that obsolete profiles pollute the search results obtained by a querying party.

In a further embodiment, the brokerage service's search engine may supply to the querying party, upon finding a matching profile, the number of content information items that are already stored for the profile identifier of the subscriber associated with this profile. If this subscriber has already received two dozen uploads, it may seem a waste of time to upload a next content item.

The subscriber may also specify to the brokerage service, or the brokerage service itself may specify, how many uploaded content items the subscriber may keep in the repository before locking the repository to further uploads that address the profile of this subscriber, and/or before removing the subscriber's profile from a list of matching search results before providing the list to a querying party, or blocking the profile for being accessed by the brokerage service's search engine.

In a commercial setting, wherein the subscribers have posted demands for certain goods or services in their profiles, the search engine may also return the asking price per response from other parties, who have already uploaded an item that is still stored in the repository. This enables the most recent parties to check if they can offer a better price. Parties may abuse this mechanism by means of posting an asking price that is much lower than the already listed prices and then not wanting to stick to this price in a later negotiation with the subscriber. The subscriber can then submit a complaint to the service about this party, e.g., via a dedicated web page maintained by the service. If too many complaints have been received that refer to a particular party, the service may automatically decide to post the name or other public domain identifier on a blacklist, and/or to deny the party further access to the database, based on the party's IP address. On the other hand, subscribers can also provide positive feedback about parties who have uploaded content information. For example, the subscribers can rate the quality or usefulness of the content information or of the eventual products or services offered by the parties. This is implemented at the brokerage service by means of providing, e.g., a simple menu of options that can be checked off by the subscriber upon having accessed the content information or upon having concluded a transaction with the party. Parties are thus rated by the population of subscribers. Parties can be ranked according to their ratings or their average ratings. Parties who consistently receive high ratings may be given some privileges, such as being listed in a publicly accessible honors-list, being given faster or privileged access to the database. An aspect of the business model is that the parties (or: suppliers) pay the brokerage service in return for which they are able to post content information to targeted subscribers, thus acquiring access to the potential market and being supported by the market intelligence created by the brokerage service. A high positive rating translates into good public relations and leads to reduced costs for the suppliers. Note that suppliers need not necessarily be entities such as companies, institutions or organizations, but that they can be ordinary private people.

An embodiment of the brokerage service adopts a business model wherein it makes available to parties, for a fee, demographic information derived from the profiles of the subscribers. A population of subscribers can be large enough (and geographically dense) enough to extract statistically relevant information that might be of interest to commercial enterprises, governmental institutions or other organizations. For example, the brokerage service extracts information from the profiles, current and/or accumulated over the past, about the demand for, e.g., sunshades in a certain geographic region or district, for barbers in a certain city, for single-family detached houses in a certain geographic region. The brokerage service may, in principle, not publish the volume of demands. Similarly, the brokerage service makes available to interested parties the demographics of the supplies.

In a further embodiment of the brokerage service, the subscribers compiling profiles or indications for the profiles, as well as the parties uploading content information interact with the brokerage service using pre-formatted templates so as to enable the brokerage service to find matches between attributes in the profiles and attributes in the uploaded content information. For example, the subscriber is given a profile template with the following fields: "wanted"; "type or brand", "price range or limit"; and the party is given a party template with fields: "offered"; "type or brand", "asking price". Now, if a subscriber wants an electric guitar of the brand "Fender" for a price lower than Euro 100, he/she fills out the profile template as follows: "wanted" = electric guitar; "type or brand" = Fender; "price range" = < Euro 100. A supplier fills in the party template with "offered" = electric guitar; "type or brand" = Fender, "asking price" = Euro 95. The brokerage server simply compares the compatible fields and decides that there is a match and so alerts the subscriber.

For clarity, it is noted here that, in operational use of the method of the invention, a particular profile in the database may be associated with multiple subscribers, or with a single subscriber, or that a single subscriber may have multiple profiles.

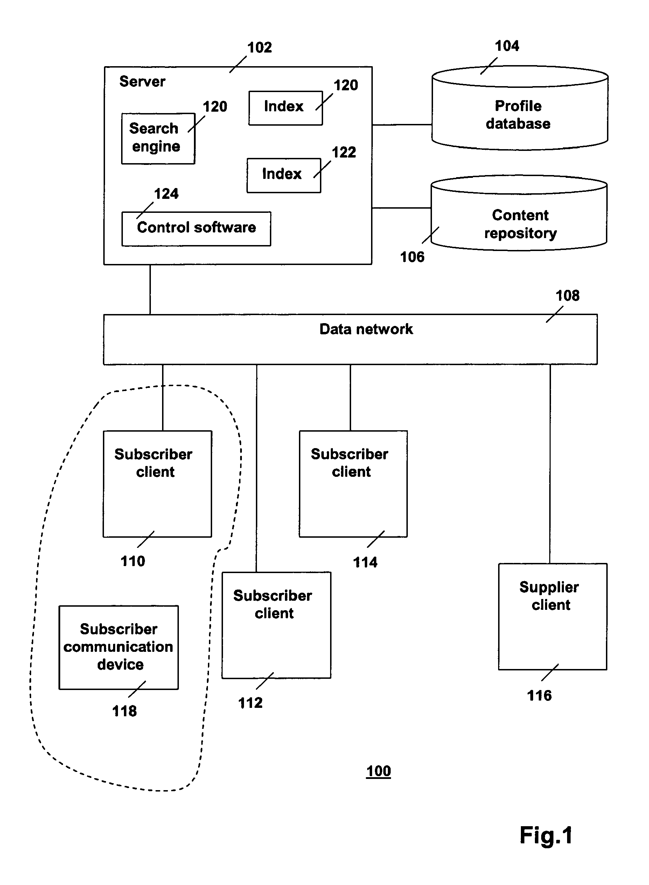

Fig.1 is a diagram of a system 100 in the invention. System 100 comprises a server 102 running software that implements the brokerage service of the invention, a profile database 104 for storing the profiles of the subscribers to the service, and a content repository 106 for storing content information uploaded by querying parties. System 100 further comprises a data network 108, such as the Internet, connecting a plurality of subscriber clients, e.g., clients 110, 112 and 114, to server 102. System 100 also comprises a party client 116 that is connected to server 102 via data network 106.

Consider the following scenario wherein the user of client 110 subscribes to the brokerage service in the invention. The user contacts server 102 via client 110 and registers with the service. The user fills out an online form with his/her contact information for receiving alerts from server 102. The user enters, e.g., the email address of client 110 or a telephone number of his/her communications device 118, e.g., his/her mobile telephone. The user then declares his/her current interests or demands, e.g., by means of entering text into, or otherwise editing, a web page maintained at server 102 for this specific subscriber. If the subscriber has finished, server 102 stores the information about the interests as a profile of this subscriber in database 104.

A supplier of a specific type of goods accesses database 104 via his/her client 116, data network 108 and search engine 120 running at server 102. The access is provided without the party having to register with the service. Search engine 120 enables the supplier to browse or query database 104, e.g., by means of keywords. The keywords selected or search criterions otherwise entered by this supplier are representative of the type of goods he/she supplies. Database 104 has indexed the profiles stored and search engine 120 enables to find a match between one or more profiles and the supplier's keywords. Upon finding a match, server 102 returns to supplier the relevant information in the matching profile, together with the profile identifier of the matching profile. Note that a single subscriber may have declared multiple interests that do not overlap, of which only a single one is relevant to the supplier. In that case, only the profile's information about the relevant interest is returned to supplier 116, together with the profile identifier.

Assume that the matching profile is the one of the subscriber, who uses client 110, and that the profile identifier returned to supplier 116 is the one of the profile associated with this particular subscriber. The supplier now uploads to server 102 content information that is relevant to this profile, together with the profile identifier, and with a public domain identifier of the supplier. Server 102 stores this content information in repository 106, and updates database 104 for this subscriber, by means of adding a pointer that refers to this content information as stored. Note that if profiles of multiple subscribers match the supplier's keyword or keywords, database 104 is updated with pointers for each of the relevant subscribers.

The storing of the supplier's content information in repository 106 may be implemented in a variety of manners. For example, the supplier uploads to server 102 an electronic document, such as text, an image, a video or audio clip, or a combination thereof. This electronic document is then stored in repository 106. The pointers are stored in database 104 as associated with the subscriber using client 110 and possibly other subscribers, depending on their profiles matching or not. The pointers refer to this document. As another example, the supplier is given a web page that has a URL within the domain of the service. The supplier may compile his/her content information in this web page. The pointers in database 104 that are associated with subscribers having matching profiles point then to this URL.

As the subscriber who uses client 110 is the one of the matching profile, server 102 compiles a message or another alert, and sends this to communication device 118, whose address has been registered with the service by this subscriber. In this manner, the subscriber is notified of the fact that there possibly relevant content information awaiting that reflects his/her declared interests.

Subscribers may consult an index 120 of linguistic terms that is maintained and has been compiled by the service on the basis of keywords that have been entered by suppliers in the past. This index may assist the subscriber with selecting the proper terms or more appropriate phrasings or more correct terms. Similarly, suppliers may consult a further index 122 of further linguistic terms. Index 122 is maintained and has been compiled by the service on the basis of keywords that reflect the current interests as represented by the indications included in the profiles that are currently stored in database 104. Index 122 may facilitate the suppliers to choose the proper terms in the proper language to increase the probability of finding a genuine match.

In an embodiment implementing above scenarios, the relevant portion(s) of the matching profiles are returned to the querying supplier before the supplier can upload the content information. In this manner, the supplier can tailor the presentation of the content information to each individual one of the matching profiles. In another scenario, the supplier first upload content information that is then stored in repository 106. The supplier or the provider of the brokerage service may use keywords or other attributes to categorize the content information. Then, server 102 itself may periodically query database 104 using these keywords in order to find matching profiles. This other scenario has the advantage that it caters for a changing population of subscribers and for changing interests. That is, after a new subscriber has registered his/her profile with the service or when a registered subscriber has edited or otherwise modified his/her profile, there may be a match with the content information stored in repository 106 where there had not been any before.

Most, if not all, operations carried out by the brokerage service in the invention can be implemented under control of control software 124 running on server 102.

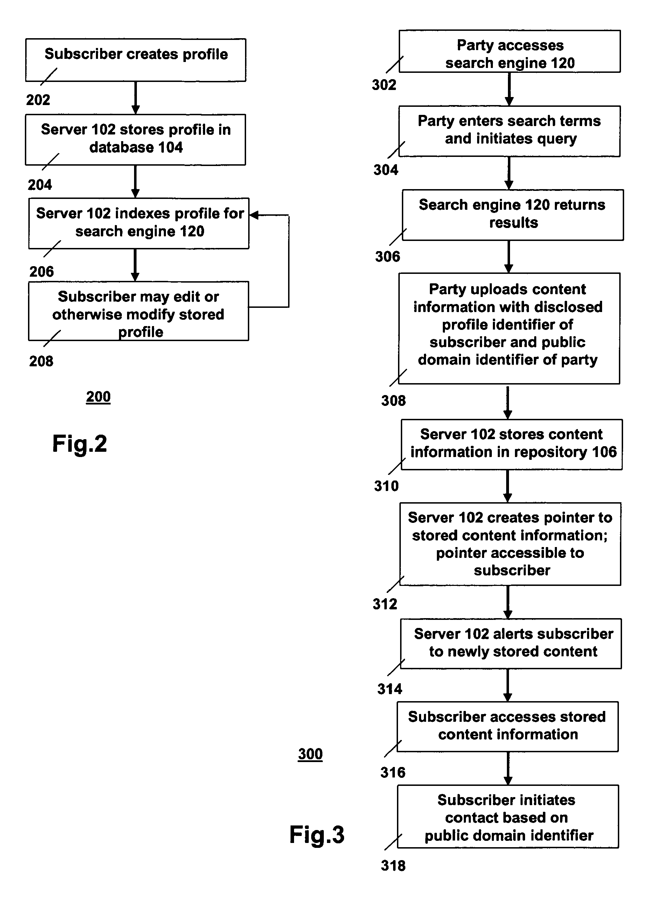

Fig.2 is a diagram of a process 200 according to the invention that illustrates the interactions of a subscriber with system 100. In a step 202, the subscriber creates his/her profile, e.g., in one of the manners discussed above or another manner. In a step 204, server 102 stores the profile in database 104 as associated with the unique profile identifier for this subscriber. In a step 206, server 102 indexes the profile stored for being used with search engine 120. For example, when database 104 is being queried with a particular keyword that also occurs in, or is otherwise associated with, this particular profile, server determines that this particular profile is a valid search result. In a step 208 the subscriber, whose profile has been stored and indexed, may edit, change, update or otherwise modify his/her profile, preferably any time he/she wishes to do so. Upon server 102 detecting a change to the profile, process 200 returns to step 206. Step 206 then takes account of the changes in order to update the index made for this profile. Fig.3 is a diagram of a process 300 that illustrates system actions involving a party, who interacts with the brokerage service that runs on system 100. In a step 302, the party accesses search engine 120 on server 102 via data network 108. In a step 304, the party enters search terms into search engine 120 and initiates the querying of database 104 with these search terms. In a step 306, search engine 120 returns its search results, e.g., in the form of a relevant portion of a profile that matches the search terms and a profile identifier. As mentioned earlier above, the profile identifiers may change dynamically so as to be useable by the party only once in order to prevent spamming. In a step 308, the party uploads content information to server 102 addressing the relevant subscriber via the profile identifier currently disclosed. The party also submits his/her email address, and/or his/her telephone number, and/or his/her street address. In a step 310, server 102 stores the content information in repository 106. In a step 312, server 102 prepares a pointer to the stored content information and makes the pointer accessible to the relevant subscriber associated with the profile identifier. In a step 314, server 102 alerts the subscriber to the newly stored content information that is accessible through the pointer. In a step 316, the subscriber accesses the stored content information via his/her client, e.g., client 110 and determines that he/she wishes to discuss a transaction with the party that has uploaded the content information. In a step 318, the subscriber takes the initiative to contact the party, for example indirectly via server 102, in order to discuss how to proceed. Server 102 then serves as a forwarding service that conceals the actual network addresses or telephone numbers of the subscriber and of the party. The discussion can again remain anonymous, with respect to both subscriber and party, at least up to the point at which the goods and/or services are to be delivered.

## Claims

1. A method of providing a brokerage service via a data network (108), wherein:
the method comprises maintaining a database (104) that stores a plurality of profiles;
each respective one of the profiles is functionally associated with one or more subscribers to the service via a respective profile identifier that preserves anonymity of the one or more subscribers;
each respective one of the profiles comprises one or more respective indications representative of a respective interest of the one or more subscribers associated with the respective profile;
the method comprises:
enabling a party (116) to query the database without registering with the brokerage service and to retrieve at least a specific one of the profiles;
enabling the party, without registering with the brokerage service, to upload specific content information to the brokerage service via the data network, using a specific one of the profile identifiers to identify the specific profile, under the condition that the content information comprises an identifier of the party that is available in the public domain; and
upon receipt of the content information and verifying the presence of the further identifier, storing the content information in a repository (106) for being made accessible to one or more specific subscribers associated with the specific profile.

2. The method of claim 1, comprising alerting the specific subscriber to the content information when stored.

3. The method of claim 1 or 2, comprising providing storage means for storing the uploaded content information.

4. The method of claim 1, 2 or 3, wherein the party has conditional access to the database under control of the service.

5. The method of claim 1, 2, 3 or 4, comprising maintaining an index (120) of certain linguistic terms representative of the indications currently registered in the database for facilitating the party's querying of the database.

6. The method of claims 1, 2, 3, 4 or 5, comprising maintaining a further index (122) of further linguistic terms representative of further content information uploaded by further parties in the past, for facilitating creating a particular one of the profiles.

7. The method of claim 1, 2, 3, 4, 5 or 6, wherein the profile identifiers are dynamically allocated to the subscribers.

8. A method of providing a brokerage service via a data network (108), wherein:
the method comprises maintaining a database (104) storing a plurality of profiles;
each respective one of the profiles is functionally associated with one or more subscribers to the service via a respective profile identifier that preserves anonymity of the one or more subscribers;
each respective one of the profiles comprises one or more respective indications representative of a respective interest of the one or more subscribers associated with the respective profile;
the method comprises:
enabling a party (116) to upload specific content information via the data network to the service without registering with the brokerage service, the content information being **characterized by** an attribute and including a further identifier of the party from the public domain;
storing the content information in a repository (106);
running a query on the database using the attribute for determining a specific one of the profiles matching the attribute; and
upon finding a the specific profile, making the stored content information accessible to the one or more specific subscribers associated with the specific profile.
